# EUROPEAN PATENT SPECIFICATION

(11) **EP 3 444 669 B1**
(45) Date of publication and mention of the grant of the patent: **30.12.2020**
(21) Application number: 17782329.1
(22) Date of filing: 07.04.2017
(51) Int. Cl.: G03B 35/10, G02B 7/02, G03B 17/02, G03B 19/07, H04N 5/225, H04N 5/232

(54) **MULTIPLE EYE OPTICAL DEVICE**
OPTISCHE VORRICHTUNG MIT MEHRFACHEM AUGE
DISPOSITIF OPTIQUE À MULTIPLES YEUX

(30) Priority: 15.04.2016 JP 2016081680
(43) Date of publication of application: 20.02.2019
(73) Proprietor: Hitachi Automotive Systems, Ltd., Hitachinaka-shi Ibaraki 312-8503 (JP)
(72) Inventor: YAMAGUCHI, Akihiro, Tokyo 100-8280 (JP); SHINOHARA, Hidenori, Hitachinaka-shi Ibaraki 312-8503 (JP); TAKEUCHI, Kenichi, Hitachinaka-shi Ibaraki 312-8503 (JP); FUJIWARA, Shinichi, Tokyo 100-8280 (JP); OKAMURA, Masayuki, Tokyo 100-8280 (JP); KUBOTA, Chiemi, Tokyo 100-8280 (JP)
(74) Representative: Strehl Schübel-Hopf & Partner
(86) International application number: PCT/JP2017/014583
(87) International publication number: WO 2017/179516

(56) References cited:
- WO-A1-2010/100915
- WO-A1-2014/015867
- JP-A- H1 068 858
- JP-A- H10 232 128
- JP-A- 2001 242 521
- JP-A- 2001 296 462
- JP-A- 2005 227 643
- JP-A- 2007 052 060
- JP-A- 2014 002 222
- JP-A- 2014 211 577
- KR-B1- 101 132 209
- US-A1- 2010 231 779

## Description

### Technical Field

The present invention relates to multi-view optical apparatus.

### Background Art

A multi-view optical apparatus that calculates a distance from an image obtained using a plurality of optical devices is known as apparatus of measuring a distance to an object. The multi-view optical apparatus capable of distance measurement is suitably used in an automobile driver-assist system, a robot attitude control system, a shipboard rangefinder, and the like. Conceivable systems as an automobile driver-assist system include systems for emergency automatic brake, for maintaining a following distance, for preventing lane departure, for automatically avoiding an accident, and the like. In such systems, a multi-view optical apparatus called a stereo camera is used as one of vehicle-mounted sensors for measuring a distance to an object.

The stereo camera includes two optical devices that are arranged to have optical axes approximately parallel to each other and arranged in positions at a predetermined distance (baseline length) away from each other. In the stereo camera, a distance to an object can be calculated from parallax between images obtained by the two optical devices. Therefore, mounting the stereo camera to be pointed in the travel direction of the automobile allows detection of a shape of a road and a position of an object existing on the road. Because of this, contribution to the automobile collision prevention is expected, and therefore there is need for a vehicle-mounted stereo camera at low cost and with high reliability.

Japanese Unexamined Patent Application Publication No. 2001-296462 (Patent Literature 1) is known as the background art in the technical field and forms the basis for the two-part form of present claim 1. The publication discloses "a lens unit including a pair of lens elements, and a sensor unit including a pair of sensor elements are fixed to both ends of a holder. The lens unit has a secured portion placed on a plane extending through approximately the center of the pair of lens elements and also perpendicular to the baseline length direction. The holder has a secured portion located close to or abutting on the secured portion of the lens unit. And, the secured portion of the lens unit and the secured portion of the holder are firmly secured together with a solvent or an adhesive interposed between them. " Document JP2001242521 discloses a stereo camera with improved accuracy of distance measurement.

### Citation List

### Patent Literature

Patent Literature 1: Japanese Unexamined Patent Application Publication No. 2001-296462

### Summary of Invention

### Technical Problem

An issue to be addressed in the multi-view optical apparatus is the accuracy of distance measurement being reduced by optical axis offset due to changes over time. The optical axis offset means a phenomenon where an object image location offset results from a change of the relative position relationship between an optical axis of a lens forming part of the optical device and an imaging device. This is caused by displacement of the fixed position of the lens or imaging device from the predetermined position due to changes in temperature and/or the like. The multi-view optical apparatus calculates a distance to an object from parallax between images obtained by the plurality of optical devices, and therefor this causes inconsistency in distance measurement value. In the stereo camera, a distance to an object is calculated from baseline-lengthwise parallax between images obtained by the two optical devices. Because of this, if optical axis offset occurs in the baseline length direction, the error between distance measurement values is increased. Accordingly, in the stereo camera, there is need to inhibit the optical axis offset in the baseline length direction due to changes over time in order to maintain the accuracy of distance measurement over a long term.

Patent Literature 1 cited above describes the mechanism to measure a distance to a subject by use of an optical module to which the lens unit and the sensor unit are secured with adhesives. However, the optical axis offset in the baseline length direction due to changes over time cannot be prevented in structure without any adhesive existing in the baseline length direction of the lens unit, as in the optical module described in Patent Literature 1. In such an optical module, it is deemed that the optical axis offset in the baseline length direction is easily caused by the positional displacement of the lens unit because, for example, if thermal stress in the baseline length direction acts on the adhere portion due to a change in ambient temperature, shear stress is applied to the adherend surface of the lens unit. To address this, the present invention provides a multi-view optical apparatus that produces less optical axis offset in the baseline length direction caused by a positional displacement of the lens even under environments in which temperature varies largely.

### Solution to Problem

To solve the above problems, a multi-view optical apparatus according to the present invention as defined in claim 1 is provided. Advantageous Effects of Invention

According to the present invention, it is possible to provide a multi-view optical apparatus that produces less optical axis offset in the baseline length direction caused by aging even under environments in which temperature varies largely.

The above and other problems to be addressed, configurations and advantageous effects will be made apparent from the following description of embodiments.

### Brief Description of Drawings

Fig. 1 is an overall perspective view of a multi-view optical apparatus in accordance with the present invention.
Fig. 2A is a front view of the multi-view optical apparatus in accordance with the present invention.
Fig. 2B is a sectional view taken along the line AA of Fig. 2A.
Fig. 3 is a diagram explaining the fixing structure around through holes in accordance with a first embodiment.
Fig. 4 is a diagram representing a state of a lens barrel being inserted into the center of a flange.
Fig. 5 is a diagram representing a state of the lens barrel being inserted while being offset from the center of the flange.
Fig. 6 is a diagram representing a state of the lens barrel being inserted while being inclined with respect to the center axis of the flange.
Fig. 7 is a diagram explaining the fixing structure around through holes in accordance with a second embodiment.
Fig. 8 is a diagram representing the mechanism that causes incomplete filling of adhesives to produce positional displacement of the lens barrel.
Fig. 9 is a diagram explaining the fixing structure around through holes in accordance with a third embodiment.
Fig. 10 is a diagram explaining the fixing structure around through holes in accordance with a fourth embodiment.
Fig. 11 is a diagram explaining the fixing structure around through holes in accordance with a fifth embodiment.
Fig. 12 is diagrams explaining an example of the advantageous effects in the fifth embodiment.

### Description of Embodiments

Embodiments will now be described with reference to the drawings .

### First Embodiment

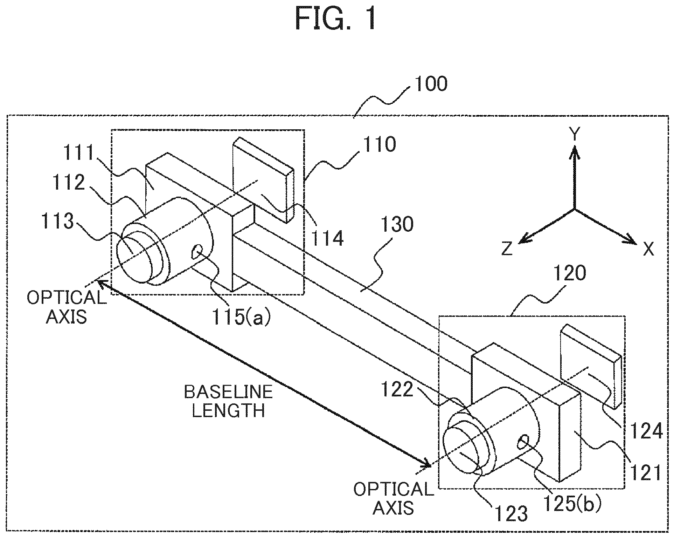

A first embodiment will be described using Fig. 1, Fig. 2A, Fig. 2B and Fig. 3.

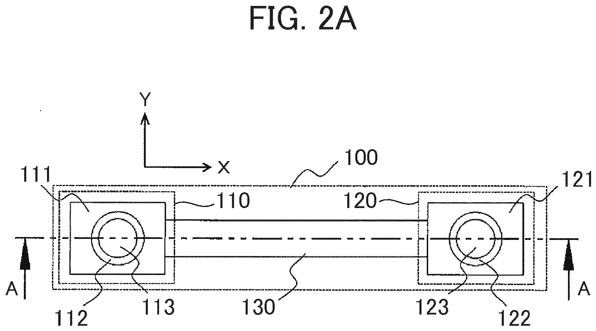

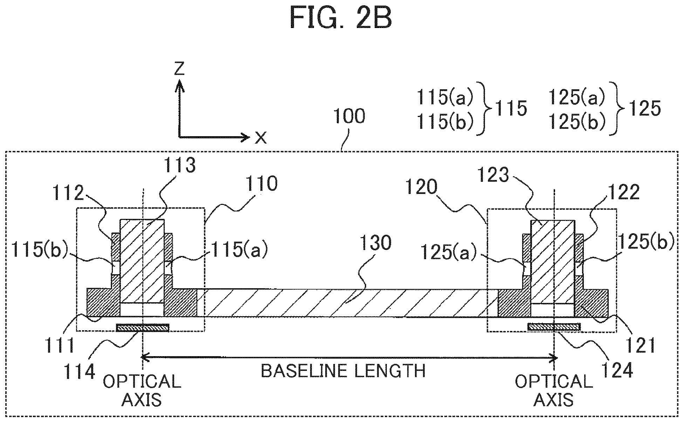

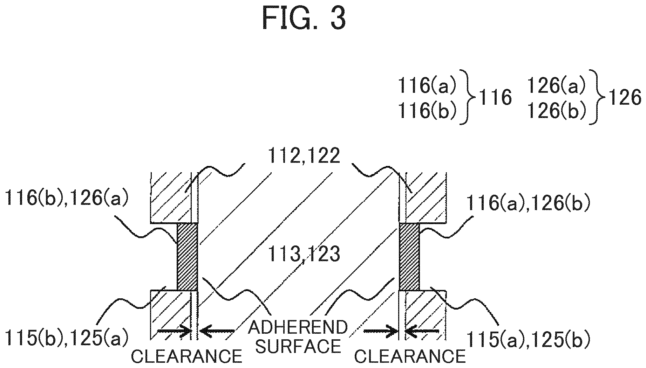

Fig. 1 is an overall perspective view of a multi-view optical apparatus in accordance with the present invention. Fig. 2A is a front view of the multi-view optical apparatus in accordance with the present invention. Fig. 2B is a sectional view taken along the line AA of Fig. 2A. Fig. 3 is a diagram describing the fixing structure around through holes 115 and through holes 125 in Fig. 2B in accordance with the first embodiment.

The multi-view optical apparatus 100 has an optical device 110, an optical device 120, and a center body 130.

The optical device 110 has a base 111, a flange 112, a lens barrel 113, an imaging device 114, a pair of through holes 115 (a through hole 115(a) and a through hole 115(b)). The base 111 and the flange 112 form a housing of the optical device 110.

The tubular flange 112 is inserted over the lens barrel 113 in the coaxial direction, and has a side surface in which the through hole 115(a) and the through hole 115(b) are formed in the baseline length direction (in the X direction illustrated in Fig. 1 to Fig. 3). Note that the inner diameter of the flange 112 is larger than the outside shape of the lens barrel 113 in order to facilitate the insertion of the lens barrel 113. The lens barrel 113 is fixed to the flange 112 through the through hole 115(a) and the through hole 115(b).

The imaging device 114 is secured to a position on the opposite side of the base 111 from the lens barrel 113. It is noted that conceivably specific methods whereby the lens barrel 113 is fixed to the flange 112 include a method of injecting adhesives 116 (an adhesive 116 (a) and an adhesive 116 (b)) respectively into the through hole 115 (a) and the through hole 115 (b) as illustrated in Fig. 3, as well as a method of inserting a screw into the through hole, a method of injecting resin, a method of inserting an elastic body such as rubber or the like, and the like.

With the configuration, the lens barrel 113 forms an image of externally acquired visual information on the imaging device 114, whereby the optical device 110 obtains an external image. In this connection, it is required that the optical axis of the lens barrel 113 and the optical axis of the imaging device 114 are parallel to each other at this time.

The optical device 120 has a base 121, a flange 122, a lens barrel 123, an imaging device 124, a pair of through holes 125 (a through hole 125(a) and a through hole 125(b)). The base 121 and the flange 122 form a housing of the optical device 120. The tubular flange 122 is inserted over the lens barrel 123 in the coaxial direction, and has a side surface in which the through hole 125(a) and the through hole 125(b) are formed in the baseline length direction (in the X direction illustrated in Fig. 1 to Fig. 3), and the configuration is equivalent to that of the optical device 110. Methods whereby the lens barrel 123 is fixed to the flange 122 are similar to those for the optical device 110. Specifically, the conceivable methods include a method of injecting adhesives 126 (an adhesive 126(a) and an adhesive 126(b)) respectively into the through hole 125(a) and the through hole 125(b) as illustrated in Fig. 3, as well as a method of inserting a screw into the through hole, a method of injecting resin, a method of inserting an elastic body such as rubber or the like, and the like. Although the optical device 110 will be mainly described hereafter, the optical device 120 is considered to be configured in like manner with the optical device 110. The optical device 110 and the optical device 120 are secured to positions located at a predetermined distance from each other via the center body 130.

Comparison is made between an external image acquired by the optical device 110 and an external image acquired by the optical image 120 to calculate a parallax in the baseline length direction, thereby generating a distance image including external three-dimensional information. In this connection, it is required that the optical axis of the lens barrel 113 and the optical axis of the lens barrel 123 are parallel to each other at this time.

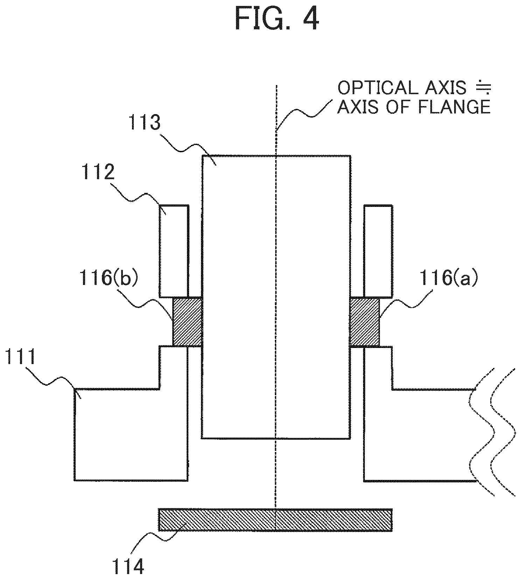

Reference will now be made to describe an example mechanism that can inhibit optical axis offset in the baseline length direction due to changes over time in accordance with the present invention, with reference to Figs. 4, 5, and 6.

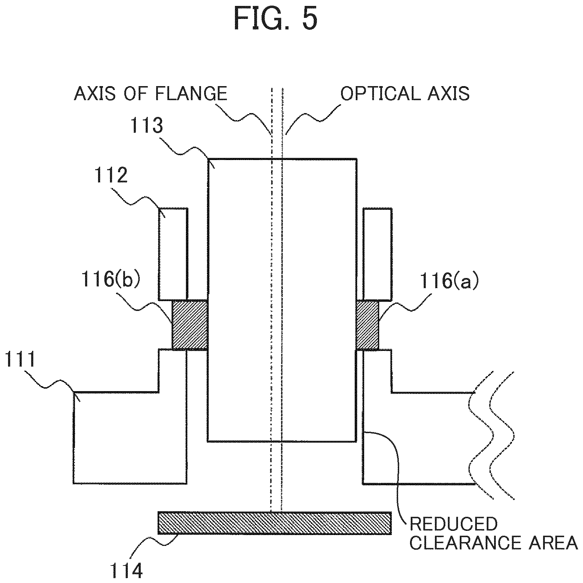

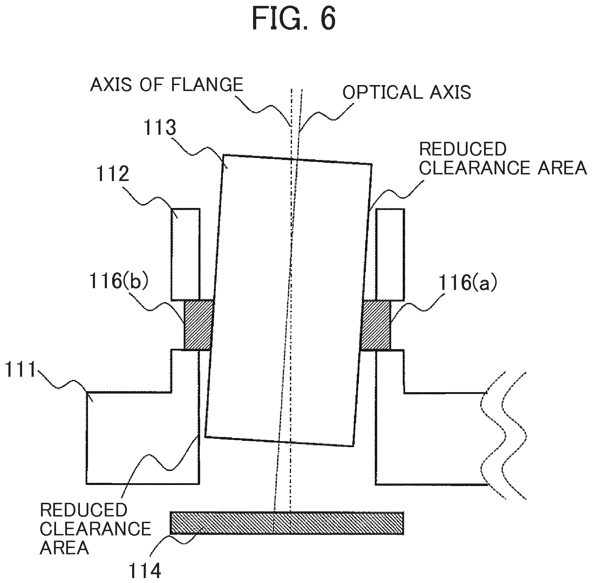

Fig. 4 is a diagram representing a state of the lens barrel 113 being inserted into the center of the flange 112. Fig. 5 is a diagram representing a state of the lens barrel 113 being inserted into the flange 112 while being offset from the center of the flange 112 in the baseline length direction. Fig. 6 is a diagram representing a state of the lens barrel 113 being inserted while being inclined in the baseline length direction with respect to the center axis of the flange 112.

An ideal inserted state of the lens barrel 113 is a state as illustrated in Fig. 4 in which the optical axis of the lens barrel 113 and the central axis of the flange 112 are aligned with each other. In such a state, the lens barrel 113 is fixed to the flange 112 while having an evenly spaced clearance from the periphery.

On the other hand, in the insertion of the lens barrel 113, due to the problem of mounting precision, the lens barrel 113 may be fixed in conditions where the optical axis of the lens barrel 113 is offset from the central axis of the flange in the baseline length direction (Fig. 5) or alternatively where the optical axis of the lens barrel 113 is inclined in the baseline length direction (Fig. 6). In such fixed conditions, a reduced clearance area is created as illustrated in Fig. 5 and Fig. 6. Because of this, contact between the lens barrel 113 and the flange 112 is likely to result from a change in temperature.

For example, if the temperature of the surroundings of the optical device 110 decreases in the fixed conditions as illustrated in Fig. 5 or Fig. 6, contraction of the flange 112 effects contact between the lens barrel 113 and the flange 112, and the contact force acts in the baseline length direction of the lens barrel 113. The contact force acts repeatedly on the fixed portion through the lens barrel 113, so that the deformation is accumulated, thus causing optical axis offset in the baseline length direction over time. For prevention of the optical axis offset occurring in such mode, the configuration according to the present invention is effective, in which the lens barrel 113 is secured by forming the through holes 115 (the through hole 115(a) and the through hole 115(b)) in the baseline length direction of the side surface of the flange 112, and then injecting the adhesives 116 (the adhesive 116(a) and the adhesive 116(b)) or alternatively inserting screws into the through holes 115.

In conventional fixing methods as typified by Patent Literature 1 described earlier, the adherend surface of the lens is parallel to the baseline length direction. In such structure, for example, if a contact force as described above acts in the baseline length direction of the lens, a shearing force is applied to the adherend surface. If the shearing force is applied to the adherend surface, stress distribution in the adherend surface is not uniform and thus the stress is concentrate on a very small area such as an end of the adherend surface and/or the like. As a result, the adhesive 116 is significantly deformed in the baseline length direction to cause optical axis offset.

On the other hand, in the fixing method proposed by the present invention, the adherend surface of the lens extends perpendicular to the baseline length direction. In such structure, for example, if the contact force described above acts in the baseline length direction of the lens, a tensile force or a compressive force is applied to the adherend surface. If an axial axis such as a tensile force, a compressive force and/or the like is applied to the adherend surface, stress distribution in the adherend surface is uniform as compared with the shearing force, so that stress concentration is not easily caused. As a result, with the configuration of the present invention, it is possible to inhibit the optical axis offset in the baseline length direction occurring due to a change in temperature.

### Second Embodiment

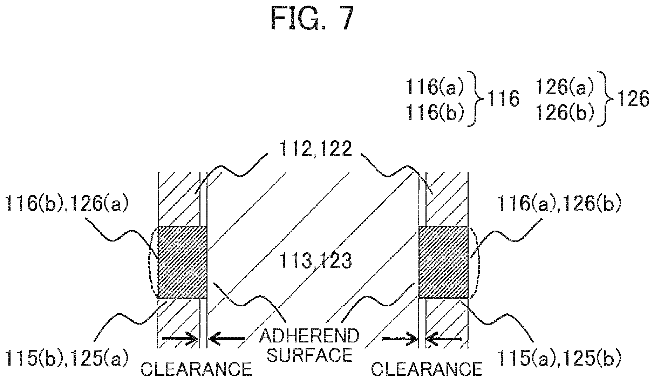

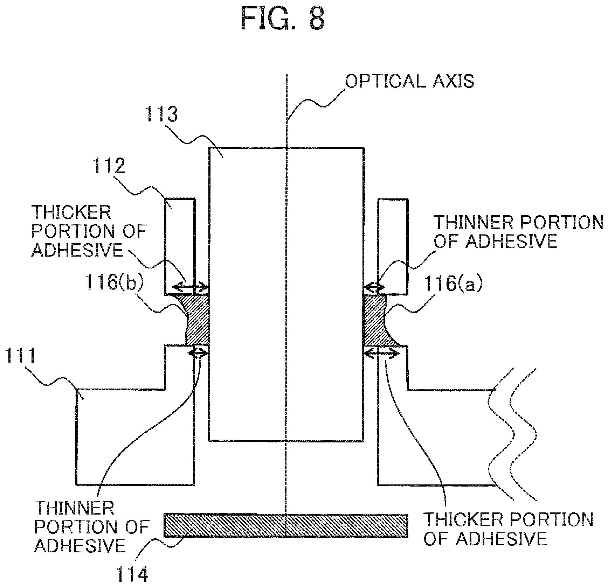

A second embodiment is described with reference to Fig. 7 and Fig. 8. It is noted that things that have been described in the first embodiment but not described in the embodiment can be suitably employed in the embodiment unless otherwise specified. Fig. 7 is a diagram explaining the fixing structure around the through holes 115 and the through holes 125 in accordance with the second embodiment. Fig. 8 is a diagram representing the mechanism that causes incomplete filling of the adhesives 116 to produce a positional deviation of the lens barrel 113.

In the embodiment, as illustrated in Fig. 7, the adhesives 116 (the adhesive 116 (a) and the adhesive 116(b)) are charged respectively into the through holes 115 (the through hole 115(a) and the through hole 115(b)) in the baseline length direction in a larger amount than the volume of each through hole. Likewise, the adhesives 126 (the adhesive 126(a) and the adhesive 126(b)) is charged respectively into the through holes 125 (the through hole 125(a) and the through hole 125(b)) in the baseline length direction in a larger amount than the volume of each through hole.

If the adhesive 116 is charged into the through hole 115 in a smaller amount than the volume of the through hole 115, the adhesive 116 wets up the wall surface of the though hole 115, and thus variations in thickness of the adhesive 116 occurs as illustrated in Fig. 8. If the adhesive 116 undergoes repeated changes in temperatures, the volume is gradually varied by influence of hardening-strain relief and/or the like. Also, the amount of change in volume is larger in the thicker portion of the adhesive 116, and decreases in the thinner portion. Therefore, where there are variations in thickness of the adhesive 116, the lens barrel 113 is gradually inclined from the original fixed position by changes in volume of the adhesive 116, resulting in occurrence of optical axis offset. Note that the same applies to the case where the adhesive 126 is charged into the through hole 125 in a smaller amount than the volume of the through hole 125.

On the other hand, as described in the embodiment, in the configuration where the adhesives 116 and the adhesives 126 are each charged in a larger amount than the volume of each of the through holes 115 and the through holes 125, the adhesive 116, 126 does not wet up the wall surface of the though hole 115, 125. Because of this, a reduction in variations in thickness of each of the adhesives 116 and the adhesives 126 is achieved. Therefore, with the configuration in accordance with the embodiment, in addition to the advantageous effects in the first embodiment, the optical axis offset in the baseline length direction can be further inhibited from being produced due to changes in temperature.

### Third Embodiment

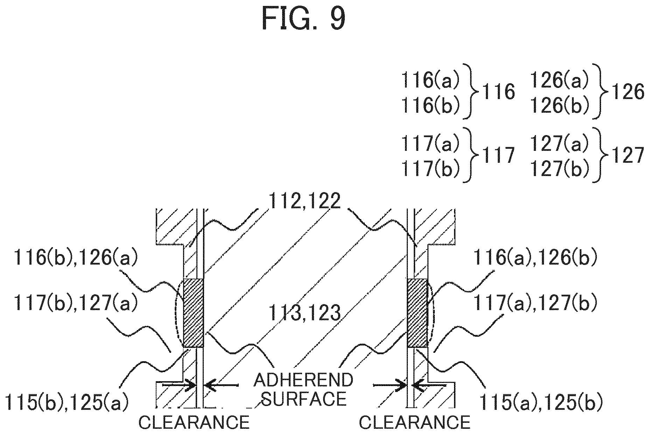

A third embodiment is described with reference to Fig. 9. It is noted that things that have been described in the first and second embodiments but not described in the embodiment can be suitably employed in the embodiment unless otherwise specified. Fig. 9 is a diagram explaining the fixing structure around the through holes 115 and the through holes 125 in accordance with the third embodiment.

In the embodiment, as illustrated in Fig. 9, thin-walled regions 117 (a thin-walled region 117(a) and a thin-walled region 117(b)) are formed respectively around the through holes 115 (the through hole 115(a) and the through hole 115(b)) in the baseline length direction. Likewise, thin-walled regions 127 (a thin-walled region 127(a) and a thin-walled region 127(b)) are formed respectively around the through holes 125 (the through hole 125(a) and the through hole 125(b)) in the baseline length direction.

With the configuration in accordance with the embodiment, in addition to the advantageous effects in the first and second embodiments, it is possible to reduce the amount of adhesive used when the adhesives 116 and the adhesives 126 are respectively charged in larger amounts than the volumes of the through holes 115 and the through holes 125. This allows a reduction in direct material costs of the adhesive 116 and the adhesive 126, and additionally the prevention of uncured portions of the adhesive 116 and the adhesive 126 from remaining in the fixed portions. Further, the time required to cure the adhesive 116 and the adhesive 126, and the amount of input energy can be reduced.

### Fourth Embodiment

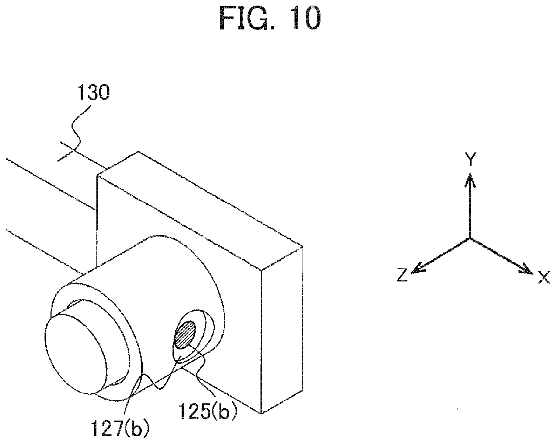

A fourth embodiment is described with reference to Fig. 10. It is noted that things that have been described in the first to third embodiments but not described in the embodiment can be suitably employed in the embodiment unless otherwise specified.

Fig. 10 is a diagram explaining the fixing structure around the through holes 115 and the through holes 125 in accordance with the fourth embodiment. In the embodiment, as illustrated in Fig. 10, the thin-walled regions 117(a), 117(b), 127(a) and 127(b) each having a level difference step are formed respectively around the through hole 115 (a), the through hole 115 (b), the through hole 125 (a) and the through hole 125(b) in the baseline length direction. Specifically, the level difference step is formed in each of the surrounding directions including the pitch direction of each of the thin-walled regions 117 (a), 117(b), 127(a) and 127(b) (the Y-axis direction perpendicular to both the baseline length direction (X-axis direction) and the optical axis direction of the lens barrel 113, 123 (Z-axis direction)). Note that, although Fig. 10 illustrates only the thin-walled region 127(b) formed around the through hole 125 (b), the similar thin-walled regions 117(a), 117 (b) and 127 (a) are formed respectively around the other through holes 115(a), 115(b) and 125(a).

With the configuration in accordance with the embodiment, in addition to the advantageous effects in the first to third embodiments, it is possible to prevent the adhesive from dripping to contaminate the product when a larger amount of adhesive than the volume of the through hole is charged.

### Fifth Embodiment

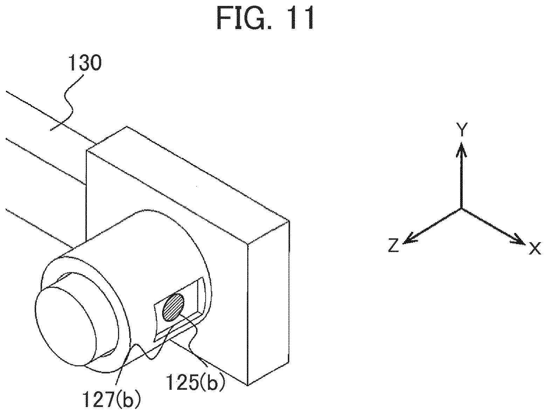

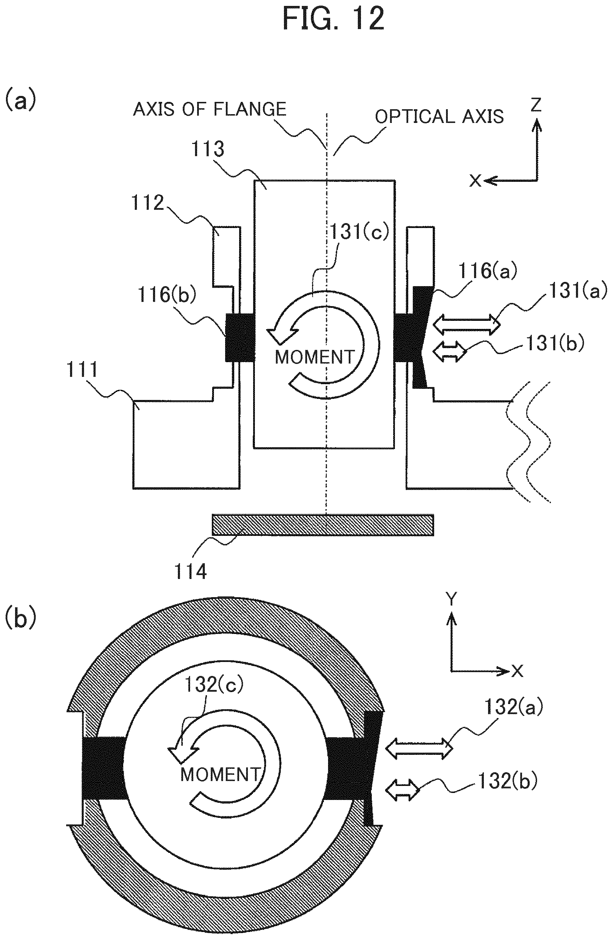

A fifth embodiment is described with reference to Fig. 11 and Fig. 12. It is noted that things that have been described in the first to fourth embodiments but not described in the embodiment can be suitably employed in the embodiment unless otherwise specified.

Fig. 11 is a diagram explaining the fixing structure around the through holes 115 and the through holes 125 in accordance with the fifth embodiment. In the embodiment, as illustrated in Fig. 11, the thin-walled regions 117(a), 117(b), 127(a) and 127(b) each having a level difference step are formed respectively around the through hole 115 (a), the through hole 115 (b), the through hole 125 (a) and the through hole 125 (b) in the baseline length direction. At this stage, the length in the Y-axis direction (the pitch direction) from the center of the through hole to the level difference step is shorter than the length in the Z direction from the center of the through hole to the level difference step. Note that, although Fig. 11 illustrates only the thin-walled region 127(b) formed around the through hole 125(b), the similar thin-walled regions 117(a), 117(b) and 127(a) are formed respectively around the other through holes 115(a), 115(b) and 125(a) .

Fig. 12 is diagrams explaining an example of the advantageous effects in the embodiment. As illustrated in Fig. 12(a), if the adhesive 116(a) adheres to the wall surface of the thin-walled region 117(a), the adhesive 116(a) may have uneven thickness due to surface tension and/or the like.

For example, as illustrated in Fig. 12(a), where the thickness of an upper portion of the adhesive 116(a) in the figure is greater than that of a lower portion in the figure, the force applied to the lens barrel 113 by expansion/contraction of the adhesive is composed of a force 131(a) and a force 131(b), and the force 131(a) added by the upper portion of the adhesive in the figure is greater than the force 131(b) added by the lower portion of the adhesive. Therefore, by a synthesis of the force 131(a) and the force 131(b), a counterclockwise moment 131(c) is added to the lens barrel 113, resulting in an offset between the central axis of the flange and the optical axis of the lens barrel 113.

On the other hand, as illustrated in Fig. 12 (b), where the adhesive adheres to the wall surface of the thin-walled region 117(a) in the Y-axis direction and the thickness of an upper portion of the adhesive 116(a) in the figure is greater than the thickness of a lower portion in the figure, the force applied to the lens barrel 113 by expansion/contraction of the adhesive is composed of a force 132(a) and a force 132(b), and the force 132(a) that is added by the upper portion of the adhesive 116(a) in the figure is greater than the force 132(b) that is added by the lower portion of the adhesive. Therefore, by a synthesis of the force 132(a) and the force 132(b), a counterclockwise moment 132 (c) is added to the lens barrel 113. However, the moment 132(c) has a low influence on the optical axis offset of the lens barrel 113 as compared with the moment 131(c), and therefore the adhesive 116(a) having uneven thickness in the Y-axis direction has less influence on causing optical axis offset.

In this manner, the adherence of adhesive to the wall surface of the thin-walled region 117(a) in the Z-axis direction has a greater influence on optical axis offset than the adherence of adhesive to the wall surface in the Y-axis direction. Therefore, there is need for higher priority to be placed on the prevention of the adhesive from adhering to the wall surface of the thin-walled region 117(a) in the Z-axis direction.

In the embodiment, the length in the Z-axis direction from the center of the through hole to the level difference step is set to be longer than the length in the Y-axis direction from the center of the through hole to the level difference step in order to increase the distance between the adhesive and the wall surface. This allows the prevention of connection between the adhesive and the wall surface in the Y-axis direction.

With the configuration in accordance with the embodiment, in addition to the advantageous effects in the first to fourth embodiments, it is possible to prevent drips of the adhesive from adhering to the level difference step in the Y-axis direction to cause variations in thickness of the adhesive in the optical axis direction when a larger amount of adhesive than the volume of the through hole is charged.

### List of Reference Signs

- 100 ...: Multi-view optical apparatus
- 110, 120 ...: Optical device
- 111, 121 ...: Base
- 112, 122 ...: Flange
- 113, 123 ...: Lens barrel
- 114, 124 ...: Imaging device
- 115, 125 ...: Through hole
- 116, 126 ...: Adhesive
- 117, 127 ...: Thin-walled portion
- 130 ...: Center body

## Claims

1. A multi-view optical apparatus (100), comprising at least two optical devices (110, 120) that are arranged to have optical axes extending approximately parallel to each other, each optical device (110, 120) including:
a housing having a flange (112,122) of a tubular shape; and
a lens (113, 123) inserted into and fixed to the flange (112,122),
wherein the multi-view optical apparatus (100) is a stereo camera for measuring a distance to an object from a parallax between images obtained by the two optical devices (110, 120),
**characterised in that**, assuming that a direction in which the two optical devices (110, 120) are arranged is a baseline length direction,
a through hole (115, 125) is formed in a side surface of the flange (112,122) and on an extension in the baseline length direction of the lens (113, 123), and
the housing and lens (113, 123) are fixed to each other via the through hole (115, 125).

2. The multi-view optical apparatus (100) according to claim 1, wherein an adhesive (116, 126) is injected into the through hole (115, 125) to fix the housing and the lens (113, 123) to each other.

3. The multi-view optical apparatus (100) according to claim 2, wherein a larger amount of the adhesive (116, 126) than a volume of the through hole (115, 125) is charged.

4. The multi-view optical apparatus (100) according to any one of claims 1 to 3, wherein a region of reduced wall thickness is formed as a thin-walled region (117, 127) around the through hole in the baseline length direction (115,125).

5. The multi-level optical apparatus according to claim 4, wherein assuming that a direction perpendicular to both the baseline length direction and a direction of the optical axis of the lens (113, 123) is a pitch direction, a level difference step is formed in the pitch direction of the thin-walled region (117, 127).

6. The multi-view optical apparatus (100) according to claim 5, wherein a level difference step is formed around the thin-walled region (117, 127).

7. The multi-view optical apparatus (100) according to claim 6, wherein of the level difference step formed around the thin-walled region (117, 127), a portion from the through hole (115, 125) to the level difference step in the pitch direction has a length shorter than a length of a portion from the through hole (115, 125) to the level difference step in the optical axis direction of the lens (113, 123).

8. The multi-view optical apparatus (100) according to claim 1, wherein the housing and the lens (113, 123) are fixed to each other by inserting a screw through the through hole (115, 125).

9. The multi-view optical apparatus (100) according to claim 1, wherein the housing and the lens (113, 123) are fixed to each other by injecting rubber or resin into the through hole (115, 125).

## Patentansprüche

1. Optisches Mehrfachansichtsgerät (100), das mindestens zwei optische Vorrichtungen (110, 120) umfasst, die so angeordnet sind, dass ihre optischen Achsen ungefähr parallel zueinander verlaufen, wobei jede optische Vorrichtung (110, 120) umfasst:
ein Gehäuse mit einem rohrförmigen Flansch (112, 122); und
eine Linse (113, 123), die in den Flansch (112, 122) eingesetzt und daran befestigt ist,
wobei das optische Mehrfachansichtsgerät (100) eine Stereokamera zum Messen eines Abstands zu einem Objekt aus einer Parallaxe zwischen Bildern ist, die durch die beiden optischen Vorrichtungen (110, 120) erhalten werden,
**dadurch gekennzeichnet, dass** unter der Annahme, dass eine Richtung, in der die beiden optischen Vorrichtungen (110, 120) angeordnet sind, eine Basislinien-Längsrichtung ist,
ein Durchgangsloch (115, 125) in einer Seitenfläche des Flansches (112, 122) und auf einer Verlängerung in der Basislinien-Längsrichtung der Linse (113, 123) ausgebildet ist, und
das Gehäuse und die Linse (113, 123) über das Durchgangsloch (115, 125) aneinander befestigt werden.

2. Optisches Mehrfachansichtsgerät (100) nach Anspruch 1, wobei ein Klebstoff (116, 126) in das Durchgangsloch (115, 125) eingespritzt ist, um das Gehäuse und die Linse (113, 123) aneinander zu befestigen.

3. Optisches Mehrfachansichtsgerät (100) nach Anspruch 2, wobei eine Menge des Klebstoffs (116, 126) aufgebracht ist, die größer ist als ein Volumen des Durchgangslochs (115, 125).

4. Optisches Mehrfachansichtsgerät (100) nach einem der Ansprüche 1 bis 3, wobei ein Bereich mit reduzierter Wanddicke als ein dünnwandiger Bereich (117, 127) um das Durchgangsloch (115, 125) herum in der Basislinien-Längsrichtung ausgebildet ist.

5. Optisches Mehrfachansichtsgerät nach Anspruch 4, wobei unter der Annahme, dass eine Richtung senkrecht sowohl zur Basislinien-Längsrichtung als auch zu einer Richtung der optischen Achse der Linse (113, 123) eine Steigungsrichtung ist, eine Niveauunterschiedsstufe in der Steigungsrichtung des dünnwandigen Bereichs (117, 127) gebildet wird.

6. Optisches Mehrfachansichtsgerät (100) nach Anspruch 5, wobei um den dünnwandigen Bereich (117, 127) herum eine Niveauunterschiedsstufe gebildet wird.

7. Optisches Mehrfachansichtsgerät (100) nach Anspruch 6, wobei von der Niveauunterschiedsstufe, die um den dünnwandigen Bereich (117, 127) herum ausgebildet ist, ein Abschnitt von dem Durchgangsloch (115, 125) zu der Niveauunterschiedsstufe in der Steigungsrichtung eine Länge hat, die kürzer ist als die Länge eines Abschnitts von dem Durchgangsloch (115, 125) zu der Niveauunterschiedsstufe in der Richtung der optischen Achse der Linse (113, 123).

8. Optisches Mehrfachansichtsgerät (100) nach Anspruch 1, wobei das Gehäuse und die Linse (113, 123) durch Einführen einer Schraube durch das Durchgangsloch (115, 125) aneinander befestigt sind.

9. Optisches Mehrfachansichtsgerät (100) nach Anspruch 1, wobei das Gehäuse und die Linse (113, 123) durch Einspritzen von Gummi oder Harz in das Durchgangsloch (115, 125) aneinander befestigt sind.

## Revendications

1. Appareil optique (100) à vues multiples, comprenant au moins deux dispositifs optiques (110, 120) qui sont agencés pour avoir des axes optiques s'étendant approximativement parallèles l'un à l'autre, chaque dispositif optique (110, 120) incluant :
un logement ayant un support (112, 122) d'une forme tubulaire ; et
un objectif (113, 123) inséré dans le et fixé au support (112, 122),
dans lequel l'appareil optique (100) à vues multiples est une caméra stéréo pour mesurer une distance jusqu'à un objet à partir d'une parallaxe entre des images obtenues par les deux dispositifs optiques (110, 120),
**caractérisé en ce que**, en supposant qu'un sens dans lequel les deux dispositifs optiques (110, 120) sont agencés est un sens de la longueur de ligne de base,
un trou traversant (115, 125) est formé dans une surface latérale du support (112, 122) et sur une extension dans le sens de la longueur de ligne de base de l'objectif (113, 123), et
le logement et l'objectif (113, 123) sont fixés l'un à l'autre par l'intermédiaire du trou traversant (115, 125).

2. Appareil optique (100) à vues multiples selon la revendication 1, dans lequel un adhésif (116, 126) est injecté dans le trou traversant (115, 125) pour fixer le logement et l'objectif (113, 123) l'un à l'autre.

3. Appareil optique (100) à vues multiples selon la revendication 2, dans lequel une quantité de l'adhésif (116, 126) plus grande qu'un volume du trou traversant (115, 125) est chargée.

4. Appareil optique (100) à vues multiples selon l'une quelconque des revendications 1 à 3, dans lequel une région d'épaisseur de paroi réduite est formée comme une région à paroi mince (117, 127) autour du trou traversant (115, 125) dans le sens de la longueur de ligne de base.

5. Appareil optique (100) à niveaux multiples selon la revendication 4, dans lequel, en supposant qu'un sens perpendiculaire à la fois au sens de la longueur de ligne de base et à un sens de l'axe optique de l'objectif (113, 123) est un sens de pas, une marche de différence de niveau est formée dans le sens de pas de la région à paroi mince (117, 127).

6. Appareil optique (100) à vues multiples selon la revendication 5, dans lequel une marche de différence de niveau est formée autour de la région à paroi mince (117, 127).

7. Appareil optique (100) à vues multiples selon la revendication 6, dans lequel, de la marche de différence de niveau formée autour de la région à paroi mince (117, 127), une partie du trou traversant (115, 125) à la marche de différence de niveau dans le sens de pas a une longueur plus courte qu'une longueur d'une partie du trou traversant (115, 125) à la marche de différence de niveau dans le sens d'axe optique de l'objectif (113, 123).

8. Appareil optique (100) à vues multiples selon la revendication 1, dans lequel le logement et l'objectif (113, 123) sont fixés l'un à l'autre en insérant une vis à travers le trou traversant (115, 125).

9. Appareil optique (100) à vues multiples selon la revendication 1, dans lequel le logement et l'objectif (113, 123) sont fixés l'un à l'autre en injectant du caoutchouc ou de la résine dans le trou traversant (115, 125).
